Europäisches Patentamt

European Patent Office

Office européen des brevets

(11) Publication number: **0 141 521**
**B1**

(12) **EUROPEAN PATENT SPECIFICATION**

(45) Date of publication of patent specification: **27.12.90**

(21) Application number: **84306458.5**

(22) Date of filing: **21.09.84**

(51) Int. Cl.⁵: **G 09 G 1/16, G 09 G 1/28**

(54) Method and apparatus for controlling plurality of memory planes.

(30) Priority: **21.09.83 JP 174486/83**

(43) Date of publication of application:
**15.05.85 Bulletin 85/20**

(45) Publication of the grant of the patent:
**27.12.90 Bulletin 90/52**

(84) Designated Contracting States:
**DE FR GB**

(56) References cited:
**FR-A-2 372 492**
**US-A-4 016 544**

(73) Proprietor: **FUJITSU LIMITED**
**1015, Kamikodanaka Nakahara-ku**
**Kawasaki-shi Kanagawa 211 (JP)**

(72) Inventor: **Takahashi, Hitoshi**
**2-32-28, Kitamachi Nerima-ku**
**Tokyo 176 (JP)**
Inventor: **Fujisaku, Kiminori**
**474-59-405, Hirao**
**Inagi-shi Tokyo 206 (JP)**

(74) Representative: **Sunderland, James Harry et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to a display control apparatus, more particularly to a method and apparatus for controlling a plurality of memory planes in a writing operation in a display control apparatus of a graphic system of a personal computer.

Popularization of personal computers in various different fields has recently led to use of various graphic systems as input/output devices. In many cases, a color CRT is used as the graphic system.

As well known by persons skilled in the art, a color image on a CRT is constituted by R, G and B dots. The color image is changed by reading from and writing to memory planes storing tricolor data.

When changing the color, i.e., when changing a displayed color image to another color, a selection of memory planes and a change of logic on the selected memory planes must be sequentially performed. As a result, it is not easily possible to increase the speed of processing (change) of the color image displayed on the CRT.

FR—A—2 372 492 discloses a memory system partitioned into units to permit separate write-in and parallel unit read-out operations. When a control signal is in a first state, data can be read from or written to a particular location in the memory. When the control signal is in a second state, data can be read from or written to common word locations in each unit simultaneously.

US—A—4 016 544 discloses a memory write-in control system having a set of mask command bits corresponding to respective color designating bits. When the mask command bits are in one state, the memory content is changed in accordance with the color designating bits, and when the mask command bits are in the other state the memory content is unchanged.

The above systems allow memory access to be performed with more than one memory plane simultaneously; however, in each case it is necessary to write the same data to each plane.

The speed of processing of a color image would be further increased if different data could be simultaneously written to different memory planes.

According to one aspect of the present invention, there is provided a method of controlling a plurality of memory planes in a writing operation in a display control apparatus of a graphic system, said method including:

selectively applying a write enable signal to at least two of said plurality of memory planes;

selectively connecting at least one of the memory planes which receives the write enable signal, to a data bus;

applying data (e.g. "1") to be written to said data bus from a central processing unit; and

writing said data into the or each memory plane to which said write enable signal has been applied and which is connected to said data bus; characterised by:

writing predetermined fixed data (e.g. "0") which is different from the data applied by said central processing unit, into the or each memory plane to which said write enable signal has been applied but which is not connected to said data bus, wherein the fixed data is written through a local bus disconnected from the data bus, at least one memory plane among the memory planes receiving the write enable signal, is disconnected from the data bus, and the data from the central processing unit and the fixed data are written simultaneously.

According to a second aspect of the present invention, there is provided a display control apparatus comprising:

a plurality of memory planes for storing color image data and addressed in common by address signals transmitted from a CPU;

a plurality of plane designating units corresponding respectively to said plurality of memory planes, for selectively applying write enable signals respectively to the memory planes;

a plurality of interface units corresponding respectively to said plurality of memory planes, for selectively connecting the memory planes to a data bus, and

a plurality of interface control units for controlling the turning on and off of the respective corresponding interface units;

characterised by being operable so that:

one or more of the memory planes receiving a write enable signal are connected to the data bus, and any remaining memory planes are disconnected from the data bus;

each memory plane to which the write enable signal is applied and which is connected to said data bus has write data (e.g. "1") from the CPU written therein from the data bus; and so that, simultaneously,

each memory plane to which a write enable signal is applied but which is disconnected from said data bus has written therein predetermined fixed data (e.g. "0"), different from the data from the CPU, transmitted from the corresponding one of said interface units.

An embodiment of the present invention can provide a display control apparatus of a graphic system in a personal computer.

An embodiment of the present invention can provide a method and apparatus for controlling memory planes in a writing operation in a display control apparatus.

An embodiment of the present invention can increase the speed of processing of a color image by an improved method and apparatus for controlling memory planes in a writing operation.

With the present invention, it is possible to simultaneously write different data into a plurality of memory planes, for example, three memory planes storing tricolor data, i.e. red (R), green (G) and blue (B) data. By this, a color image displayed on a color cathode ray tube (CRT) can be quickly changed to another desired color image.

In accordance with the structure of the present invention, it is possible to simultaneously write different data to a plurality of memory planes, thereby enabling quick processing of a color image displayed on a CRT to another desired color image.

Reference is made, by way of example, to the accompanying drawings in which:

Fig. 1 is a schematic block diagram of a conventional apparatus;

Figs. 2A and 2B are basic block diagrams of an apparatus according to an embodiment of the present invention;

Figs. 3A and 3B are detailed block diagrams of the apparatus shown in Figs. 2A and 2B;

Figs. 4A and 4B are detailed block diagrams of another embodiment of the apparatus shown in Figs. 3A and 3B;

Fig. 5 is a flow chart of the processing procedure of the apparatus shown in Figs. 3A and 3B; and

Fig. 6 is a view of various modes of memory planes shown in Figs. 3A and 3B.

Before describing the preferred embodiments, an explanation will be given of a conventional method and apparatus for controlling memory planes in a writing operation in a display control apparatus.

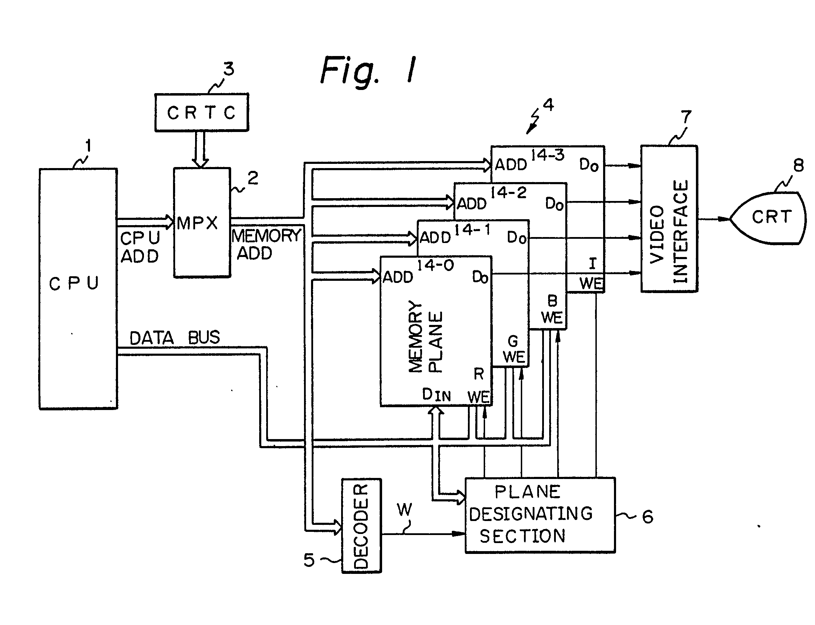

Referring to Fig. 1, an apparatus for controlling writing to memory planes basically includes a CPU 1 for commanding reading/writing to or from memory planes 14-0 to 14-3, a multiplexer (MPX) 2 for controlling the change between a CPU address signal transmitted from the CPU 1 and a scanning address signal transmitted from a CRT controller 3, the CRT controller 3 for generating a scanning address signal for displaying the image data on a CRT 8, the memory planes 14-0 to 14-3 for storing tricolor data, i.e., red (R), green (G) and blue (B) and intensity (I) data therein, the memory planes 14-0 to 14-3 being operatively connected to the CPU 1 in parallel via a data bus, and a plane designating unit 6 for designating any of the memory planes 14 based on a writing designating signal transmitted from the CPU 1.

A common address is designated at the same coordinate in each memory plane 14-0 to 14-3. Therefore, the CPU 1 can access each memory plane 14-0 to 14-3 by using the common address. In reading, red (R), green (G) and blue (B) are simultaneously read out from each plane, and the read-out data is displayed on the CRT 8. In writing, assuming that logic "0" is stored in the memory plane 14-0 (R memory) and the memory plane 14-1 (G memory) and that logic "1" is stored in the memory plane 14-2 (B memory) so that a blue color is shown on the CRT 8, to change from blue to yellow, since yellow is constituted by red and green, both logic values "0" on the R and G memories must be changed to logic "1" and the logic "1" on the B memory must be changed to logic "0".

In the conventional procedure, first the B memory is selected by the plane designating unit 6 based on the writing designating signal W transmitted from the MPX 2 via the decoder 5. Next, the logic "1" on the B memory is changed to logic "0". The R and G memories are then selected by the plane designating unit 6 and, then, the logics "1" on the R and G memories are changed to logic "0".

As explained above, the selection of the memory planes and the change of logic values in the selected memory planes must be sequentially performed. As a result, complex steps are necessary to process the color image displayed on the CRT. This prevents the processing speed from being increased in conventional processing procedures.

A method and apparatus for controlling memory planes in a writing operation according to an embodiment of the present invention will now be explained.

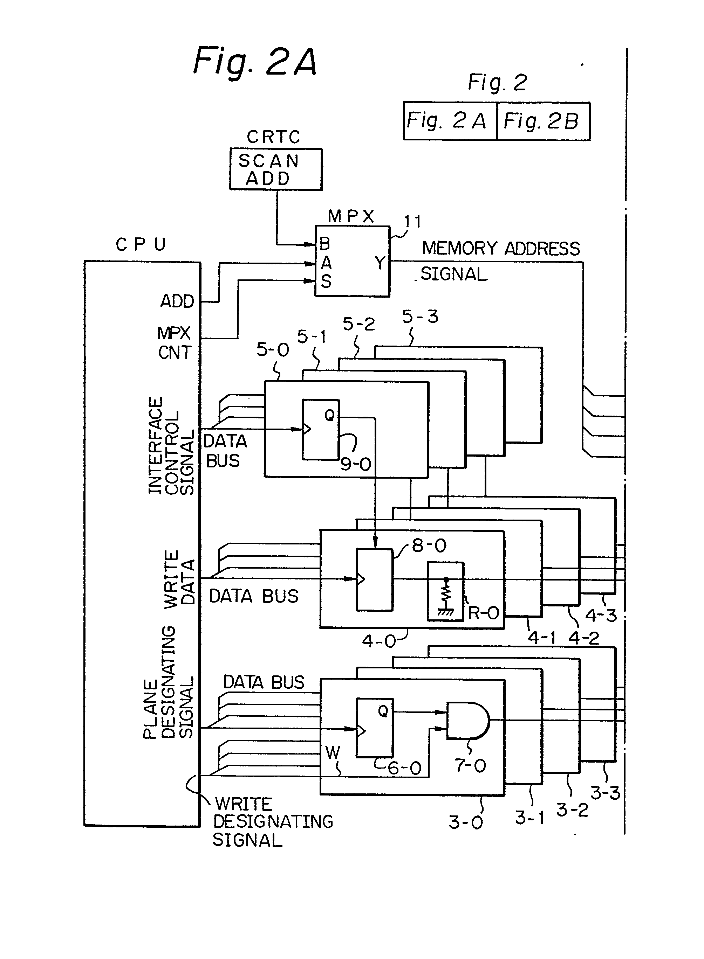

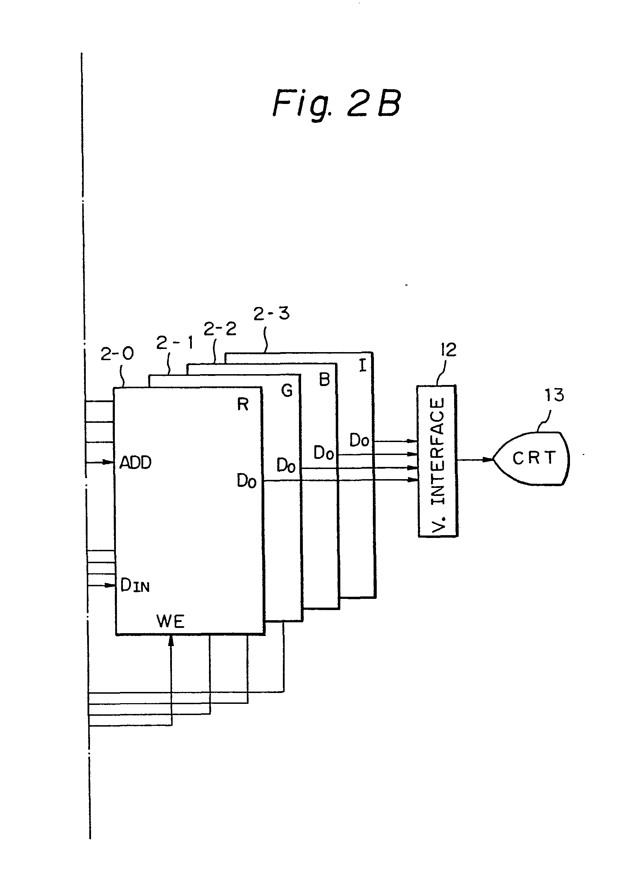

Referring to Figs. 2A and 2B, an apparatus for controlling memory planes according to an embodiment of the present invention basically includes a CPU 1; memory planes 2-0 to 2-3; plane designating units 3-0 to 3-3, each having latch circuits 6-0 to 6-3 and AND gate circuits 7-0 to 7-3; interface units 4-0 to 4-3, each having tristate gate circuits 8-0 to 8-3 and pull-down resistances R-0 to R-3; interface control units 5-0 to 5-3, each having latch circuits 9-0 to 9-3; a multiplexer 11; a video interface circuit 12; and a color CRT 13. Each memory plane and plane designating unit are connected in series to the CPU 1 via a data bus. Each memory plane and interface unit are also connected in series to the CPU 1 via the data bus. Moreover, each interface control unit is connected between an interface unit and the CPU 1 via the data bus.

The plane designating unit 3-0 is basically constituted by a plane designating flip-flop circuit used as the latch circuit 6-0, and the AND gate circuit 7-0. When a write designating signal W is applied to the AND gate circuit 7-0 after the latch circuit 6-0 is set by a plane designating signal transmitted from the CPU 1, the memory plane 2-0 is set in a write enable state by a write enable signal WE transmitted from the AND gate circuit 7-0. The other plane designating units 3-1 to 3-3 have the same constitution and operation. Accordingly, the CPU 1 can simultaneously and selectively set any one or more memory planes in the write enable state.

The interface unit 4-0 includes the tristate gate circuit 8-0, for use in writing, and pull-down resistances R-0 to R-3. When the tristate gate circuit 8-0 is on, writing data transmitted from the CPU 1 is transferred to the memory plane 2-0. When the tristate gate circuit 8-0 is off, other writing data having logic "0" transmitted from the pull-down resistance R-0 is transferred to the memory plane 2-0. The other interface units 4-1 to 4-3 have the same constitution and operation.

The interface control unit 5-0 includes a flip-flop circuit used as the latch circuit 9-0 for controlling the tristate gate circuit 8-0 in writing. When the latch circuit 9-0 is placed in a "set" or "reset" state in accordance with an interface control signal transmitted from the CPU 1, the tristate gate circuit 8-0 is turned on or off in accordance with the "set" or "reset" state of the latch circuit 9-0. The other interface control units 5-1 to 5-3 have the same constitution and operation.

To change from blue to yellow on the CRT 8, first, each memory plane 2-0, 2-1 and 2-2 (for example R, G and B memory) is placed in the write enable state based on write enable signals WE corresponding to the plane designating units 3-0, 3-1 and 3-2. At this time, the latch circuits 6-0, 6-1 and 6-2 are placed in the "set" state based on the write designating signal W transmitted from the CPU 1. Next, the tristate gate circuits 8-0 and 8-1 corresponding to the interface control units 5-0 and 5-1 are placed in the on state and the tristate gate circuit 8-2 corresponding to the interface control unit 5-2 is placed in the off state. Finally, writing data for writing logic "1" and the write designating signal W are simultaneously applied to the R and G memories (memory planes 2-0, 2-1) from the CPU 1 and logic "0" is applied to the B memory (2-2) from the pull-down resistance R-2. By the above procedure, logic "0" on the R and G memories can be changed to logic "1" and logic "1" on the B memory can be changed to logic "0". Incidentally, to facilitate the above explanation, mention was not made of the memory plane 2-3, which stores intensity or brightness data.

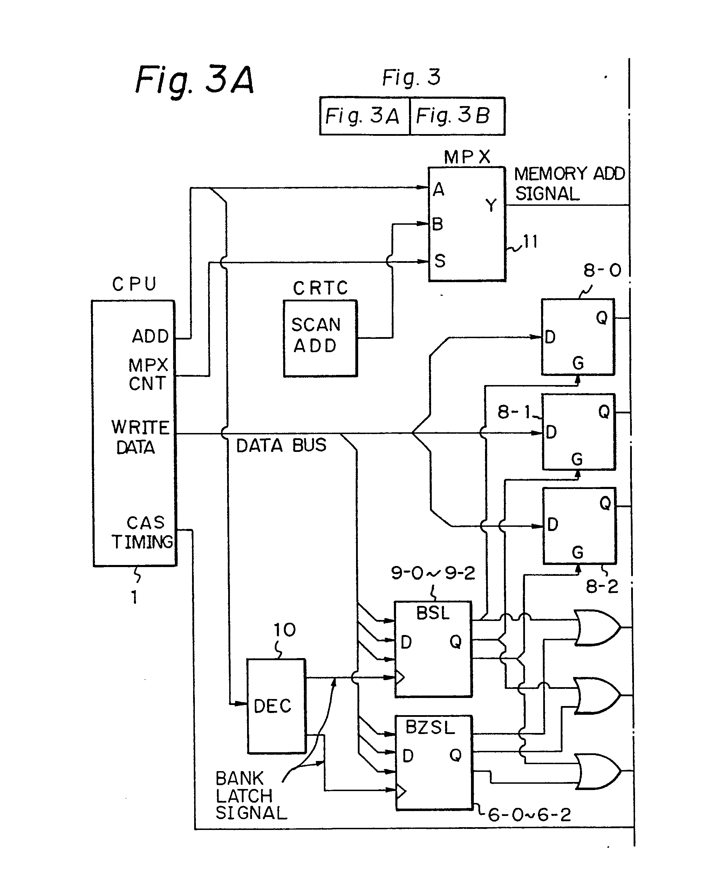

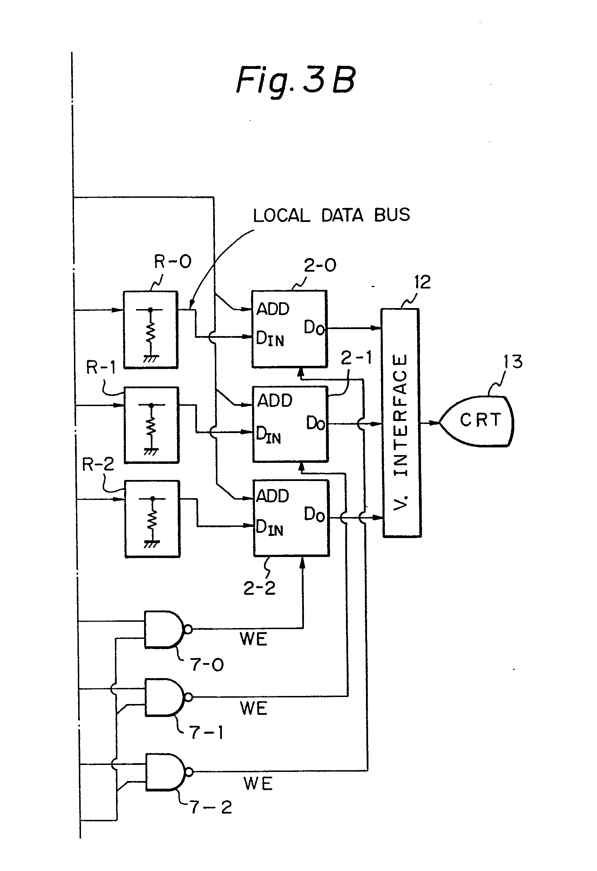

Figures 3A and 3B are detailed block diagrams of the apparatus shown in Figs. 2A and 2B. As above, since the memory plane 2-3 is used only for brightness control of the CRT 13, mention thereof is omitted to facilitate the explanation of the circuit operations.

Each memory plane 2-0 to 2-2 comprises a 64 K dynamic random access memory (DRAM). In a writing operation, writing data of 8 bits per word is applied to each input $D_{IN}$. A common memory address signal transmitted from the multiplexer 11 is simultaneously applied to each input ADD. Output data from each output $D_O$ is applied to the CRT 13 via the video interface circuit 12. Each tristate gate circuit 8-0 to 8-2 functions in so-called one-way tristate logic. That is, each gate fundamentally has three states, i.e., a first or second state of logic "1" or logic "0" in case of low output impedance and a third state of logic "0" in case of high output impedance. The on or off state of each tristate gate circuit is controlled by bank selection latches BSL used as the latch circuits 9-0 to 9-2, provided in each interface control unit 5-0 to 5-2 shown in Fig. 2A. When any one or two tristate gate circuits are set to the first or second state, i.e., the on state, writing data of logic "1" or "0" transmitted from the CPU 1 via the data bus can be written to the corresponding memory planes (in common). In this case, the other one or two tristate gate circuits which were not set to the first or second state are set to the third state, i.e., the off state. A tristate gate circuit which is set in the third state cannot transfer the writing data from the CPU to the corresponding memory plane. However, logic "0" is transferred as writing data from the corresponding pull-down resistance R-0, R-1 or R-2 to the corresponding memory plane via a local data bus instead of the writing data transmitted from the CPU 1 via the data bus. As explained in Figs. 2A and 2B, if the tristate gate circuits 8-0 and 8-1 are on and the tristate gate circuit 8-2 is off, for example, the writing data from the CPU of logic "1" can be written into the corresponding R and G memories, and the other writing data of logic "0" can be written into the corresponding B memory. Accordingly, when a plane designating unit is placed in the write enable state based on the write designating signal, if the tristate gate circuit is placed in the on state, the writing data of logic "1" can be written into the corresponding memory plane, while if the tristate gate circuit is set to the off state, the other writing data of logic "0" (namely, fixed data of logic "0") can be written to the other corresponding memory plane.

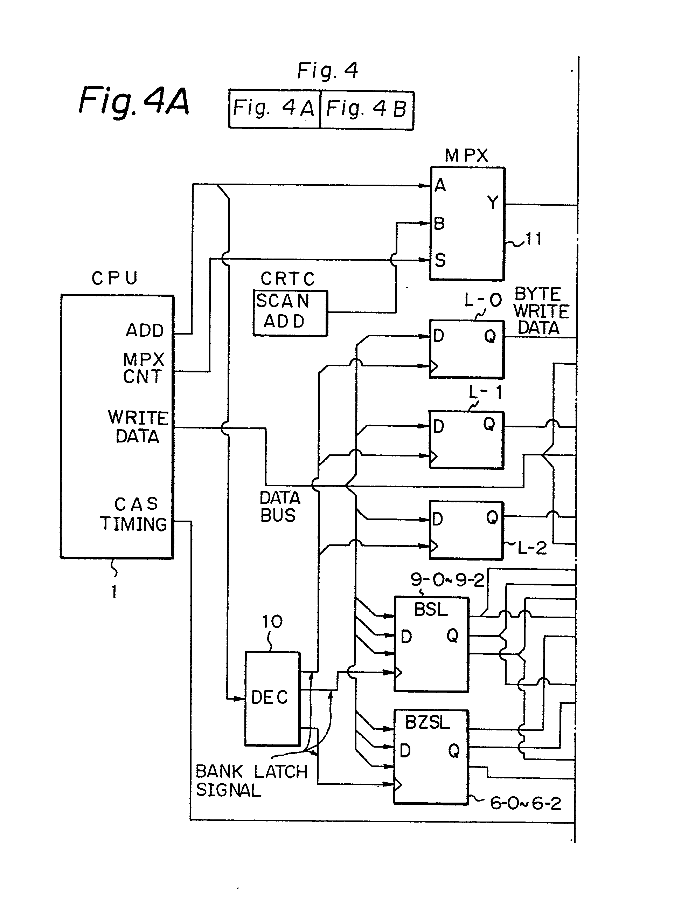

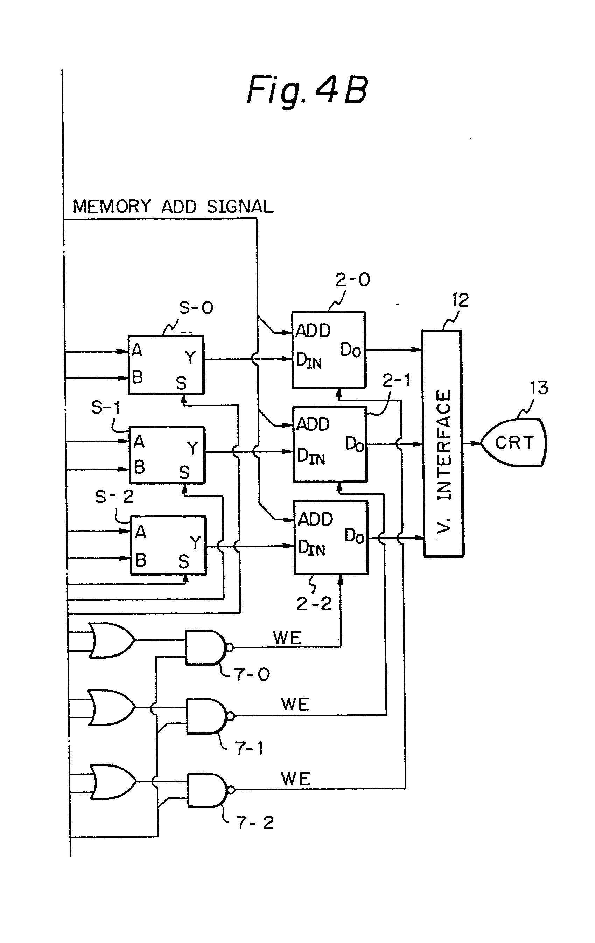

Figures 4A and 4B are detailed block diagrams of another embodiment of the apparatus shown in Figs. 3A and 3B. Referring to Figs. 4A and 4B, selection circuits S-0 to S-2 and latch circuits L-0 to L-2 are provided between the CPU 1 and memory planes 2-0 to 2-2 instead of tristate gate circuits 8-0 to 8-2 and pull-down resistances R-0 to R-2 respectively, shown in Fig. 3B. Byte write data (corresponding to the fixed data in the previous embodiment) transmitted from each latch circuit, is applied to an input A of each selection circuit. Writing data transmitted from the CPU via a data bus is applied to an input B of each selection circuit. These inputs are selected by each selection circuit based on a high or low selection signal applied to the input S transmitted from each interface control unit (bank selection latch) 9-0 to 9-2. Output data Y of each selection circuit is applied to the input $D_{IN}$ of each memory plane. Accordingly, either the byte write data or writing data from the CPU, selected by the selection circuit based on the logic "1" or logic "0" signal transmitted from the interface control unit is applied from the output Y to the corresponding memory plane. In the previous embodiment, when a tristate gate circuit is off, only logic "0" is applied to the corresponding memory plane as explained in Figs. 3A and 3B. In this embodiment, the logic "1" or "0" of the byte write data transmitted from the latch circuit can be compulsorily selected by switching the selection circuit based on the high or low selection signal transmitted from the interface control circuit.

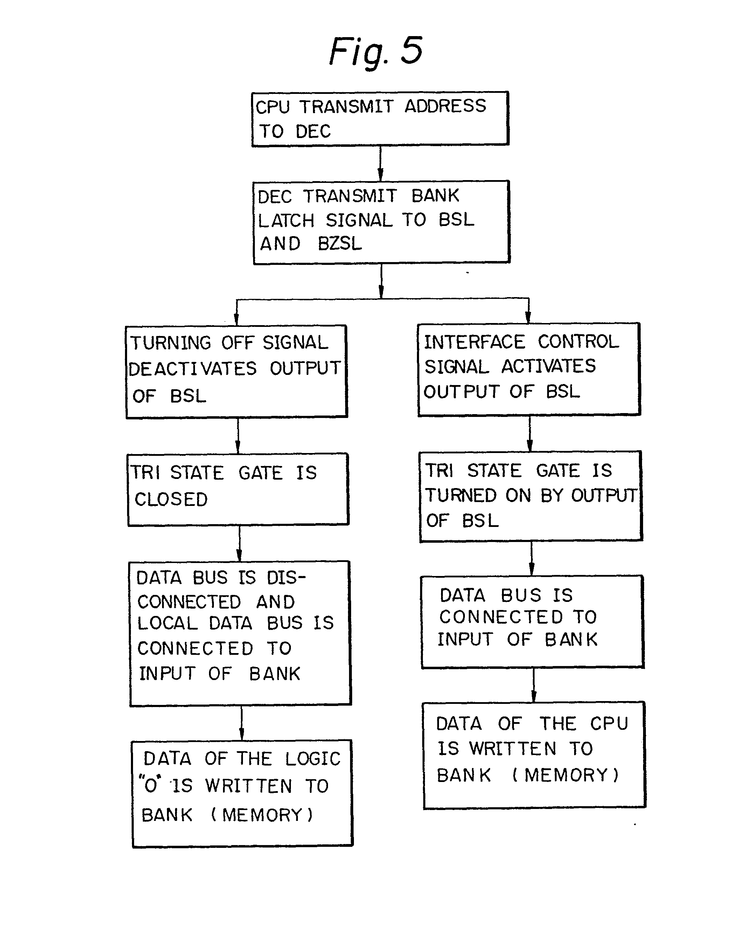

Figure 5 is a flow chart of the processing procedure of the apparatus shown in Figs. 3A and 3B. Referring to Fig. 5, first, the CPU 1 transmits an address signal to an address decoder 10. The decoder 10 designates a common address for each bank selection latch circuit BSL 9-0 to 9-2 of each interface control unit 5-0 to 5-2 and to each byte zero selection latch circuit BZSL 6-0 to 6-2 of each plane designating unit 3-0 to 3-2.

When writing the data on the CPU data bus into the DRAM's, the outputs of the bank selection latch circuits corresponding to the banks (memory planes) into which it is requested to write writing data from the CPU, are activated by an interface control signal. The corresponding tristate gate circuits are turned on by the outputs transmitted from the bank selection latch circuits. The data bus of the CPU is connected to the inputs $D_{IN}$ of the corresponding banks (DRAM, memory plane). The outputs of the byte zero selection latch circuits corresponding to the banks not requested to write the writing data from the CPU are deactivated by the turning off signal. The write enable signal to the banks not requested to write is deactivated by this procedure. When the CPU transmits the writing data to the corresponding DRAM's, the data on the CPU data bus can be written into the corresponding address of the DRAM's.

When writing data "0" by byte zero selection, the outputs of the bank selection latch circuits corresponding to the banks requested to write the byte zero are deactivated by the turning off signal. The tristate gate circuits corresponding to the banks requested to write byte zero are closed. The data bus of the CPU is disconnected from the inputs $D_{IN}$ of the corresponding banks, therefore the inputs $D_{IN}$ become equivalent to the ground connected by a pull-down resistance. Meanwhile, the outputs of the byte zero selection latch circuits corresponding to the banks requested to write the byte zero are activated, whereby the write enable signal can be transmitted to the nonselected banks by the bank selection latch circuits.

When the CPU transmits the writing operation corresponding to the DRAM's, logic "0" of the local data bus is written to the corresponding address in the banks (memory plane).

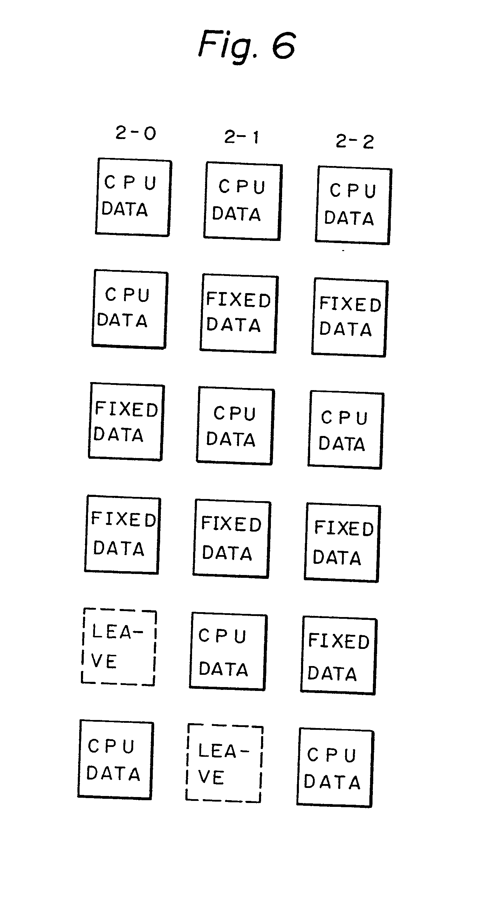

Figure 6 illustrates various modes of memory planes 2-0 to 2-2. Referring to Fig. 6, "CPU DATA" indicates the writing data of logic "1" transmitted from the CPU, "FIXED DATA" indicates the writing data of logic "0" transmitted from the pull-down resistance, and "LEAVE" indicates no change of stored data in the memory planes.

For example, when all memory planes are written by "CPU DATA", i.e., logic "1", a white color is displayed because the R, G and B memories are all logic "1". Meanwhile, when all the memory planes are written by "FIXED DATA", i.e., logic "0", a black color is displayed because the R, G and B memories are all logic "0".

## Claims

1. A method of controlling a plurality of memory planes (2-0 . . . 2-3) in a writing operation in a display control apparatus of a graphic system, said method including:
   selectively applying a write enable signal (WE) to at least two of said plurality of memory planes;
   selectively connecting at least one of the memory planes which receives the write enable signal, to a data bus;
   applying data (e.g. "1") to be written to said data bus from a central processing unit (CPU); and
   writing said data into the or each memory plane to which said write enable signal has been applied and which is connected to said data bus; characterised by:

writing predetermined fixed data (e.g. "0") which is different from the data applied by said central processing unit, into the or each memory plane to which said write enable signal has been applied but which is not connected to said data bus, wherein the fixed data is written through a local bus disconnected from the data bus, at least one memory plane among the memory planes receiving the write enable signal is disconnected from the data bus, and the data from the central processing unit and the fixed data are written simultaneously.

2. A method as claimed in claim 1, wherein said writing to said memory planes (2-0 . . . 2-3) is controlled by said write enable signal (WE).

3. A display control apparatus comprising:
   a plurality of memory planes (2-0 . . . 2-3) for storing color image data and addressed in common by address signals transmitted from a CPU;
   a plurality of plane designating units (3-0 . . . 3-3) corresponding respectively to said plurality of memory planes, for selectively applying write enable signals (WE) respectively to the memory planes;
   a plurality of interface units (4-0 . . . 4-3) corresponding respectively to said plurality of memory planes, for selectively connecting the memory planes to a data bus, and
   a plurality of interface control units (5-0 . . . 5-3) for controlling the turning on and off of the respective corresponding interface units;
   characterised by being operable so that:
   one or more of the memory planes receiving a write enable signal are connected to the data bus, and any remaining memory planes are disconnected from the data bus;
   each memory plane to which the write enable signal is applied and which is connected to said data bus has write data (e.g. "1") from the CPU written therein from the data bus; and so that, simultaneously,
   each memory plane to which a write enable signal is applied but which is disconnected from said data bus has written therein predetermined fixed data (e.g. "0"), different from the data from the CPU, transmitted from the corresponding one of said interface units.

4. An apparatus as claimed in claim 3, wherein said memory planes (2-0 . . . 2-3) comprise four memory planes storing tricolor data and intensity of brightness data.

5. An apparatus as claimed in claim 3 or 4, wherein said plane designating units (3-0 . . . 3-3) each comprise a plane designating flip-flop circuit (6-0 . . . 6-3) for latching a byte zero signal and an AND gate circuit (7-0 . . . 7-3) for generating said write enable signal.

6. An apparatus as claimed in claim 3, 4 or 5, wherein said interface units (4-0 . . . 4-3) each comprise a tristate gate circuit (8-0 . . . 8-3) for turning on or off said write data from the CPU and means for generating predetermined fixed data.

7. An apparatus as claimed in claim 6, wherein said means comprises a pull-down resistance (R-0 . . . R-3).

8. An apparatus as claimed in any one of claims 3 to 7, wherein said interface control units (5-0 . . . 5-3) each comprise a flip-flop circuit (9-0 . . . 9-3) for latching a bank selection signal.

9. An apparatus as claimed in any one of claims 3 to 8, wherein said memory planes (2-0 . . . 2-3) and plane designating units (3-0 . . . 3-3) are connected in series to said CPU.

10. An apparatus as claimed in any one of claims 3 to 9, wherein said memory planes (2-0 . . . 2-3) and interface units (4-0 . . . 4-3) are connected in series to said CPU.

11. An apparatus as claimed in any one of claims 3 to 10, wherein said interface control units (5-0 . . . 5-3) are each connected between said interface units (4-0 . . . 4-3) and said CPU.

**Patentansprüche**

1. Verfahren zur Steuerung einer Vielzahl von Speicherebenen (2-0 . . . 2-3) bei einem Schreibbetrieb in einer Anzeigesteuervorrichtung eines graphischen Systems, welches Verfahren umfaßt:

selektive Anwendung eines Schreibfreigabesignals (WE) an wenigstens zwei der genannten Vielzahl von Speicherebenen;

selektives Verbinden von wenigstens einer der Speicherebenen, welche das Schreibfreigabesignal empfängt, mit einem Datenbus;

Zuführen von Daten (z.B. "1"), die geschrieben werden sollen, von einer zentralen Prozessoreinheit (CPU) zu dem genannten Datenbus; und

Schreiben der genannten Daten in die oder jede Speicherebene, der das genannte Schreibfreigabesignal zugeführt wurde, die mit dem genannten Datenbus verbunden ist, gekennzeichnet durch:

Schreiben vorbestimmter fixierter Daten (z.B. "0"), die von den Daten verschieden sind, die von der zentralen Verarbeitungseinheit zugeführt wurden, in die oder jede Speicherebene, der das Schreibfreigabesignal zugeführt wurde, die jedoch nicht mit dem genannten Datenbus verbunden ist, wobei die fixierten Daten über einen lokalen Bus geschrieben werden, der von dem Datenbus getrennt ist, wobei wenigstens eine Speicherebene unter den Speicherebenen, die das Schreibfreigabesignal empfangen, von dem Datenbus getrennt wird, und die Daten von der zentralen Prozessoreinheit und die fixierten Daten gleichzeitig geschrieben werden.

2. Verfahren nach Anspruch 1, bei dem das genannte Schreiben zu den genannten Speicherebenen (2-0 . . . 2-3) durch das genannte Schreibfreigabesignal (WE) gesteuert wird.

3. Anzeigesteuervorrichtung mit:

einer Vielzahl von Speicherebenen (2-0 . . . 2-3) zum Speichern von Farbbilddaten und gemeinsam durch Adreßsignale, die von einer CPU übertragen werden, adressiert;

einer Vielzahl von die Ebene bestimmenden Einheiten (3-0 . . . 3-3), die jeweils der genannten Vielzahl von Speicherebenen entsprechen, um selektiv Schreibfreigabesignale (WE) den jeweiligen Speicherebenen zuzuführen;

einer Vielzahl von Schnittstelleneinheiten (4-0 . . . 4-3), die jeweils der genannten Vielzahl von Speicherebenen entsprechen, um selektiv die Speicherebenen mit einem Datenbus zu verbinden, und

einer Vielzahl von Schnittstellensteuereinheiten (5-0 . . . 5-3) zum Steuern des Einschaltens und des Ausschaltens der jeweils entsprechenden Schnittstelleneinheiten;

dadurch gekennzeichnet, daß sie so betreibbar ist, daß:

eine oder mehrere Speicherebenen, die ein Schreibfreigabesignal empfangen, mit dem Datenbus verbunden werden, und alle verbleibenden Speicherebenen von dem Datenbus getrennt werden;

in jede Speicherebene, der das Schreibfreigabesignal zugeführt wird und die mit dem genannten Datenbus verbunden ist, Schreibdaten (z.B. "1") von der CPU von dem Datenbus eingeschrieben werden; und so daß, gleichzeitig,

in jede Speicherebene, der ein Schreibfreigabesignal zugeführt wird, die jedoch von dem genannten Datenbus getrennt ist, vorbestimmte fixierte Daten (z.B. "0") eingeschrieben werden, die von den Daten von der CPU verschieden sind, übertragen von einer entsprechenden der Schnittstelleneinheiten.

4. Vorrichtung nach Anspruch 3, bei der die genannten Speicherebenen (2-0 . . . 2-3) vier Speicherebenen umfassen, die Dreifarbendaten und die Intensität von Helligkeitsdaten umfassen.

5. Vorrichtung nach Anspruch 3 oder 4, bei der die genannten die Ebenen bestimmenden Einheiten (3-0 . . . 3-3) jeweils eine die Ebene bestimmende Flipflop-Schaltung (6-0 . . . 6-3) umfassen, um ein Byte-null-Signal zu halten, und eine UND-Torschaltung (7-0 . . . 7-3) zum Erzeugen des genannten Schreibfreigabesignals.

6. Vorrichtung nach Anspruch 3, 4 oder 5, bei der die genannten Schnittstelleneinheiten (4-0 . . . 4-3) jeweils eine Dreizustands-Torschaltung (8-0 . . . 8-3) umfassen, um die genannten Schreibdaten von der CPU ein- oder auszuschalten, und Einrichtungen, um vorbestimmte fixierte Daten zu erzeugen.

7. Vorrichtung nach Anspruch 6, bei der die genannte Einrichtung einen pull-down-Widerstand (R-0 . . . R-3) umfaßt.

8. Vorrichtung nach einem der Ansprüche 3 bis 7, bei der die genannten Schnittstellen Steuereinheiten (5-0 . . . 5-3) jeweils eine Flipflop-Schaltung (9-0 . . . 9-3) zum Halten eines Bankauswahlsignales umfassen.

9. Vorrichtung nach einem der Ansprüche 3 bis 8, bei der die genannten Speicherebenen (2-0 . . . 2-3) und die die Ebenen bestimmenden Einheiten (3-0 . . . 3-3) in Reihe mit der CPU verbunden sind.

10. Vorrichtung nach einem der Ansprüche 3 bis 9, bei der die Speicherebenen (2-0 . . . 2-3) und die Schnittstelleneinheiten (4-0 . . . 4-3) in Reihe mit der genannten CPU verbunden sind.

11. Vorrichtung nach einem der Ansprüche 3 bis 10, bei der die genannten Schnittstellensteuereinheiten (5-0 ... 5-3) jeweils zwischen den genannten Schnittstelleneinheiten (4-0 ... 4-3) und der genannten CPU verbunden sind.

**Revendications**

1. Procédé de commande de plusieurs plans de mémoire (2-0 ... 2-3) dans une opération d'écriture dans un appareil de commande d'affichage d'un système graphique, ledit procédé consistant:

à appliquer sélectivement un signal d'autorisation d'écriture (WE) à au moins deux desdits plusieurs plans de mémoire;

à connecter sélectivement l'un au moins des plans de mémoire qui reçoit le signal d'autorisation d'écriture, à une ligne omnibus de données;

à appliquer des données (p.e. "1") qui doivent être écrites sur ladite ligne omnibus de données, provenant d'une unité centrale de traitement (CPU); et

à écrire lesdites données dans le ou dans chaque plan de mémoire auquel ledit signal d'autorisation d'écriture a été appliqué et qui est connecté à ladite ligne omnibus de données; caractérisé en ce qu'il consiste également:

à écrire des données fixes prédéterminées (p.e. "0") qui diffèrent des données appliquées par ladite unité centrale de traitement dans ou à chaque plan de mémoire auquel le signal d'autorisation d'écriture a été appliqué mais qui n'est pas connecté à ladite ligne ombibus de données, dans lequel les données fixes sont écrites par une ligne omnibus locale déconnectée de la ligne omnibus de données, au moins un plan de mémoire parmi les plans de mémoire recevant le signal d'autorisation d'écriture étant déconnecté de la ligne omnibus de données et les données provenant de l'unité central de traitement avec les données fixes étant écrites simultanément.

2. Procédé selon la revendication 1, dans lequel ladite écriture dans lesdits plans de mémoire (2-0 ... 2-3) est commandée par ledit signal d'autorisation d'écriture (WE).

3. Appareil de commande d'affichage comportant:

plusieurs plans de mémoire (2-0 ... 2-3) destinés à mémoriser des données d'images en couleurs et adressés en commun par des signaux d'adresse émis par une CPU;

plusieurs unités de désignation de plan (3-0 ... 3-3) correspondant respectivement auxdits plusieurs plans de mémoire, destinées à appliquer sélectivement des signaux d'autorisation d'écriture (WE), respectivement aux plans de mémoire;

plusieurs unités d'interface (4-0 ... 4-3) correspondant respectivement auxdits plusieurs plans de mémoire et destinées à connecter les plans de mémoire à une ligne omnibus de données, et

plusieurs unités de commande d'interface (5-0 ... 5-3) destinées à commander le déblocage et le blocage des unités respectives d'interface correspondantes;

caractérisé en ce qu'il fonctionne de manière:

qu'un ou plusieurs des plans de mémoire recevant un signal d'autorisation d'écriture sont connectés à la ligne omnibus de données et que les plans de mémoire qui restent sont déconnectés de la ligne omnibus de données;

que chaque plan de mémoire auquel est appliqué le signal d'autorisation d'écriture et qui est connecté à ladite ligne omnibus de données reçoit des données d'écriture (p.e. "1") provenant de la CPU, et qui y sont écrites à partir de la ligne omnibus de données; et que simultanément,

chaque plan de mémoire auquel est appliqué un signal d'autorisation d'écriture mais qui est déconnecté de ladite ligne omnibus de données est écrit avec des données fixes prédéterminées (p.e. "0") différentes des données provenant de la CPU est émises par l'une correspondante desdites unités d'interface.

4. Appareil selon la revendication 3, dans lequel lesdits plans de mémoire (2-0 ... 2-3) consistent en quatre plans de mémoire mémorisant des données tricolores et des données d'intensité de luminosité.

5. Appareil selon la revendication 3 ou 4, dans lequel chacune desdites unités de désignation de plan (3-0 ... 3-3) comporte un circuit bistable de désignation de plan (6-0 ... 6-3) destiné à conserver un signal de multiplet zéro et un circuit de porte et (7-0 ... 7-3) destiné à produire ledit signal d'autorisation d'écriture.

6. Appareil selon la revendication 3, 4 ou 5, dans lequel lesdites unités d'interface (4-0 ... 4-3) comprennent chacune un circuit de porte à trois états (8-0 ... 8-3) destiné à débloquer ou à bloquer lesdites données d'écriture provenant de la CPU et un dispositif produisant des données fixes prédéterminées.

7. Appareil selon la revendication 6, dans lequel ledit dispositif comporte une résistance chutrice (R-0 ... R-3).

8. Appareil selon l'une quelconque des revendications 3 à 7, dans lequel lesdites unités de commande d'interface (5-0 ... 5-3) comprennent chacune un circuit bistable (9-0 ... 9-3) destiné à enregistrer un signal de sélection de groupe.

9. Appareil selon l'une quelconque des revendications 3 à 8, dans lequel lesdites plans de mémoire (2-0 ... 2-3) et lesdites unités de désignation de plan (3-0 ... 3-3) sont connectés en série avec ladite CPU.

10. Appareil selon l'une quelconque des revendications 3 à 9, dans lequel lesdits plans de mémoire (2-0 ... 2-3) et lesdites unités d'interface (4-0 ... 4-3) sont connectés en série avec ladite CPU.

11. Appareil selon l'une quelconque des revendications 3 à 10, dans lequel lesdites unités de commande d'interface (5-0 ... 5-3) sont connectées chacune entre lesdites unités d'interface (4-0 ... 4-3) et ladite CPU.

Fig. 1

# Fig. 2A

Fig. 2

| Fig. 2 A | Fig. 2B |
|----------|---------|

# Fig. 2 B

# Fig. 3A

Fig. 3

| Fig. 3A | Fig. 3B |
|---------|---------|

# Fig. 3B

LOCAL DATA BUS

Fig. 4

| Fig. 4 A | Fig. 4 B |
|---|---|

Fig. 4A

# Fig. 4 B

MEMORY ADD SIGNAL

# Fig. 5

```
┌─────────────────────────┐
│ CPU TRANSMIT ADDRESS    │
│ TO DEC                  │
└─────────────────────────┘
            │
            ▼
┌─────────────────────────┐
│ DEC TRANSMIT BANK       │
│ LATCH SIGNAL TO BSL     │
│ AND  BZSL               │
└─────────────────────────┘
            │
     ┌──────┴───────────────────────────┐
     ▼                                   ▼
┌─────────────────────┐       ┌─────────────────────┐
│ TURNING OFF SIGNAL  │       │ INTERFACE CONTROL   │
│ DEACTIVATES OUTPUT  │       │ SIGNAL ACTIVATES    │
│ OF BSL              │       │ OUTPUT OF BSL       │
└─────────────────────┘       └─────────────────────┘
     │                                   │
     ▼                                   ▼
┌─────────────────────┐       ┌─────────────────────┐
│ TRI STATE GATE IS   │       │ TRI STATE GATE IS   │
│ CLOSED              │       │ TURNED ON BY OUTPUT │
│                     │       │ OF BSL              │
└─────────────────────┘       └─────────────────────┘
     │                                   │
     ▼                                   ▼
┌─────────────────────┐       ┌─────────────────────┐
│ DATA BUS IS DIS-    │       │ DATA BUS IS         │
│ CONNECTED AND       │       │ CONNECTED TO        │
│ LOCAL DATA BUS IS   │       │ INPUT OF BANK       │
│ CONNECTED TO        │       │                     │
│ INPUT OF BANK       │       └─────────────────────┘
└─────────────────────┘                  │
     │                                   ▼
     ▼                         ┌─────────────────────┐
┌─────────────────────┐       │ DATA OF THE CPU     │
│ DATA OF THE LOGIC   │       │ IS WRITTEN TO       │
│ "O" IS WRITTEN TO   │       │ BANK ( MEMORY )     │
│ BANK ( MEMORY )     │       └─────────────────────┘
└─────────────────────┘
```

# Fig. 6

|  2-0  |  2-1  |  2-2  |
| :---: | :---: | :---: |
| CPU DATA | CPU DATA | CPU DATA |
| CPU DATA | FIXED DATA | FIXED DATA |
| FIXED DATA | CPU DATA | CPU DATA |
| FIXED DATA | FIXED DATA | FIXED DATA |
| LEA-VE | CPU DATA | FIXED DATA |
| CPU DATA | LEA-VE | CPU DATA |